# FASCICULE DE BREVET EUROPEEN

(11) **EP 0 340 096 B1**
(45) Date de publication et mention de la délivrance du brevet: **31.03.1993**
(21) Numéro de dépôt: 89401163.4
(22) Date de dépôt: 25.04.1989
(51) Int. Cl.: G06F 3/033, G06K 11/06

(54) **Afficheur à surface tactile incorporée**
Anzeige mit einer eingebauten Berührungsfläche
Display with an integrated touch area

(30) Priorité: 28.04.1988 FR 8805665
(43) Date de publication de la demande: 02.11.1989
(73) Titulaire: SEXTANT AVIONIQUE, F-92366 Meudon la Foret Cédex (FR)
(72) Inventeur: Fagard, Pierre, F-78180 Montigny le Bretonneux (FR)
(74) Mandataire: de Saint-Palais, Arnaud Marie

(56) Documents cités:
- EP-A- 0 189 590
- EP-A- 0 250 931
- DE-A- 3 039 713
- US-A- 4 224 615
- PATENT ABSTRACTS OF JAPAN, vol. 8, no. 101 (P-273)[1538], 12 mai 1984, page 151 P 273; & JP-A-59 14 040 (CANON K.K.) 24-01-1984
- PATENT ABSTRACTS OF JAPAN, vol. 8, no. 101 (P-273)[1538], 12 mai 1984, page 151 P 273; & JP-A-59 14 039 (CANON K.K.) 24-01-1984
- IBM TECHNICAL DISCLOSURE BULLETIN, vol. 23, no. 1, juin 1980, pages 278-281, New York, US; E.L. WALKER: "Unified read/write panel"

## Description

La présente invention concerne un afficheur, par exemple à cristaux liquides, à surface tactile incorporée, notamment pour la réalisation d'un terminal de communication, du type permettant à un opérateur de transmettre ou de recevoir des informations, par exemple dans le cadre d'un échange convivial avec un processeur.

D'une manière générale, on sait que dans le but de réaliser de tels terminaux, il a déjà été proposé de disposer sur une surface d'affichage, notamment sur l'écran d'un tube cathodique, une plage tactile transparente telle que par exemple un clavier transparent à contacts ou un système de commutation capacitif, inductif ou équivalent. Le document EP A 0 250 931 décrit notamment une plage tactile de ce genre permettant de détecter la proximité d'un élément conducteur, par effet capacitif.

Dans ce cas, la surface d'affichage peut alors servir à visualiser au travers de la plage tactile des motifs servant à délimiter des zones d'appui de cette plage faisant office de touches, selon la composition désirée. La surface d'affichage peut en outre servir à associer à ces zones d'appui des symboles ou des légendes indiquant leur fonction. Bien entendu, la position et la forme des surfaces d'appui ainsi que les légendes qui leur sont associées peuvent varier selon le mode de fonctionnement du processeur et de son programme d'application.

Or l'un des inconvénients de cette solution consiste en ce que les informations lumineuses fournies par la surface d'affichage sont inévitablement atténuées par le dispositif tactile et ne sont bien visibles que si l'axe de vision de l'opérateur se trouve bien orienté par rapport à cette surface d'affichage.

Cet inconvénient est considérablement amplifié dans le cas où la surface d'affichage est celle d'un afficheur à cristaux liquides fonctionnant par transmission ou par réflexion ou combinaison des deux effets.

On a également proposé, notamment par le brevet EP A 0 189 950,un afficheur faisant intervenir une cellule d'affichage comprenant, entre deux couches, une couche de cristal liquide apte à rendre visible une partie de sa surface sous l'effet d'une excitation électrique, un premier réseau d'électrodes disposées sur l'une des faces de ladite couche et au moins une contre- électrode disposée sur l'autre face de ladite couche. Cette contre-électrode est connectée à des moyens électroniques de mesure aptes à détecter des perturbations de capacitance au niveau de ladite contre-électrode, par suite d'une pression exercée sur la cellule. Toutefois, cet afficheur n'effectue pas de détection de proximité électrique.

L'invention a donc plus particulièrement pour but de résoudre ces problèmes en intégrant un dispositif de détection de proximité de type capacitif à la cellule de l'afficheur à cristaux liquides.

A cet effet, elle propose un afficheur à surface tactile incorporée faisant intervenir une cellule d'affichage du type comprenant, entre deux plaques rigides dont l'une au moins est en matière transparente, une couche réalisée en un ou plusieurs matériaux présentant des propriétés électro-optiques aptes à rendre visible tout ou partie de sa surface, sous l'effet d'une excitation électrique, un réseau d'électrodes disposées sur l'une des faces de ladite couche, et sur chacune desquelles peut être appliquée une tension électrique de manière à provoquer la visualisation d'un élément d'image, et une pluralité de contre-électrodes disposées sur l'autre face de ladite couche, et connectées à des circuits électroniques de mesure aptes à détecter des perturbations d'un signal électrique appliqué à ces contre-électrodes, par suite d'une sollicitation effecutée par un opérateur.

Selon l'invention, cet afficheur est caractérisé en ce que les contre-électrodes sont portées à un potentiel commun par l'intermédiaire de résistances respectives, et sont connectées à un circuit multiplexeur piloté par un calculateur de manière à distribuer séquentiellement, sur ces contre-électrodes, des paquets d'impulsions haute fréquence produits par un générateur, en ce qu'il comprend un circuit de mesure du courant absorbé lors de l'émission de chacun des paquets d'impulsions, ce circuit de mesure étant conçu de manière à transmettre au calculateur un signal en réponse à la détection d'une variation d'impédance significative de la présence d'un élément conducteur à proximité d'une contre-électrode, mais sans contact direct avec celui-ci, et en ce que l'application de la tension alternative à haute fréquence sur les contre-électrodes est synchronisée mais décalée par rapport à l'application sur les électrodes, de la tension électrique servant à provoquer la visualisation des éléments d'image.

Avantageusement, le principe de détection de proximité du doigt de l'opérateur sur une ou plusieurs contre-électrodes consistera en l'application à ces zones d'une tension haute fréquence, et par détection du courant haute fréquence dérivé à la suite de la proximité d'un doigt de l'opérateur.

Par ailleurs, la gestion des plages de détection tactile et en particulier la détermination des zones d'appui de cette plage associées à des fonctions est assurée par un calculateur.

Des modes de réalisation de l'invention seront décrits ci-après, à titre d'exemples non limitatifs, avec référence aux dessins annexés dans lesquels :
La figure 1 est une coupe transversale schématique d'un afficheur du type à matrice active, à surface tactile selon l'invention ;
La figure 2 est une vue de dessus de la métallisation servant à la fois de commun de la cellule à cristaux liquides et d'élément sensible de la surface tactile de l'afficheur représenté sur la figure 1 ;
La figure 3 est un schéma de principe d'un circuit de commande d'un afficheur à surface tactile du type de celui représenté sur la figure 1 ;
La figure 4 est un diagramme représentatif des tensions utilisées dans le circuit représenté figure 3.

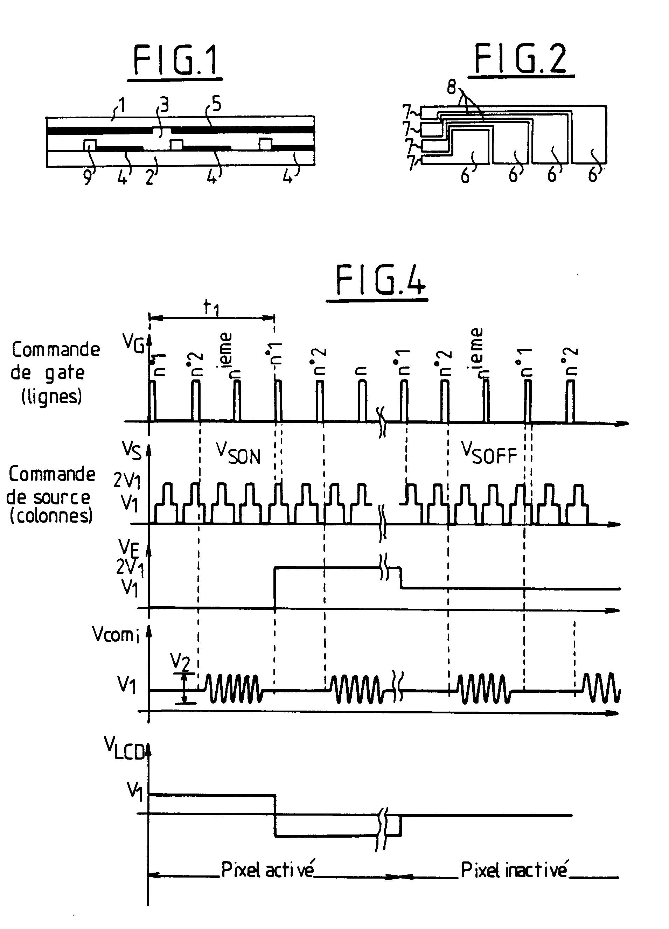

Tel que représenté sur la figure 1, l'afficheur à surface tactile présente une structure similaire à celle d'une cellule à cristaux liquides classique et comprend en conséquence, entre deux plaques en matière transparente 1, 2 une couche de cristal liquide 3, la face interne de la plaque 2 portant une pluralité d'électrodes 4, alimentées par les éléments de commande 9, disposées selon une configuration matricielle (matrice active) tandis que la face interne de la plaque 1 porte une "métallisation" 5 comparable au "commun" d'une cellule classique à cristaux liquides.

Bien entendu, selon une telle structure, l'affichage peut être obtenu soit par réflexion, soit par transmission, ou combinaison des deux effets, par l'utilisation de moyens connus : éclairage, réflecteur, etc...

Conformément à l'invention, la "métallisation" 5 est en outre utilisée en tant qu'élément sensible de manière à conférer à la plaque la fonction de surface tactile.

A cet effet, comme ceci est visible sur la figure 2, cette "métallisation" 5 est divisée en une pluralité de zones 6 respectivement reliées à des plots de connexion périphériques 7 par des plages conductrices 8. Il est clair que le nombre de zones 6 sera déterminé en fonction de la résolution de détection souhaitée. La conformation et la disposition de ces zones 6 ainsi que des plages conductrices 8 et des plots de connexion 7 peuvent être très variées.

L'exemple représenté figure 2 n'est qu'un mode d'exécution permettant d'obtenir une résolution satisfaisante.

Bien entendu, les interstices entre les zones 6 seront aussi faibles que possible de manière à ne pas diminuer la résolution de l'afficheur. Ils seront de préférence situés en regard des zones "interpixel" de cet afficheur (espacement entre les électrodes 4).

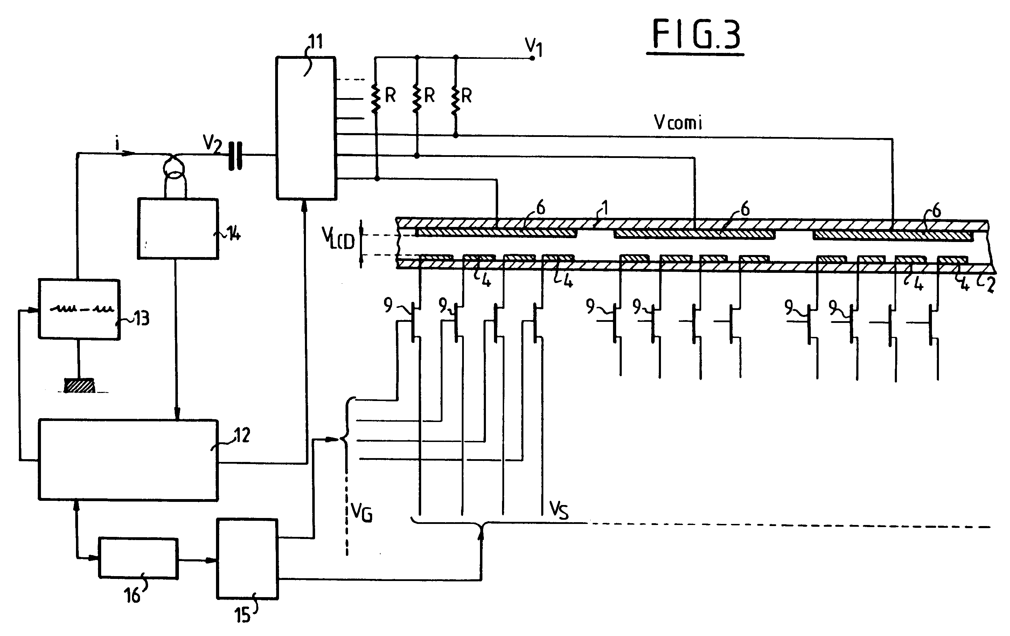

Dans l'exemple représenté sur la figure 3, l'application d'une tension d'activation sur les électrodes 4 de la matrice active est assurée par des transistors à effet de champ 9, de préférence situés à l'intérieur de la cellule. Il convient de noter à ce sujet que, bien évidemment, tout autre type d'élément de commande pourrait également être utilisé dès l'instant où il peut posséder un état haute impédance similaire. Ces transistors 9 reçoivent, sur leur gâchette, une tension de commande V_{G} (tensions de lignes de la matrice) et sur leur source, une tension de source V_{S} (tensions de colonnes de la matrice), ces deux tensions étant délivrées par un générateur d'alimentation des éléments d'image 15 piloté par un signal de synchronisation élaboré (bloc 16) à partir d'un calculateur 12. Parallèlement, sur chacune des zones 6 du "commun" est appliqué un potentiel commun de valeur moyenne V₁.

Dans cet exemple, le procédé de détection de proximité du doigt de l'opérateur sur une ou plusieurs plages consiste :
- à appliquer en outre séquentiellement sur chacune des zones 6 un potentiel alternatif haute fréquence V₂, de préférence à nombre entier d'alternances, déterminé de telle façon qu'il n'altère pas la valeur moyenne du potentiel V₁ et ne perturbe pas le milieu cristallin de la cellule,
- à mesurer le courant haute fréquence dérivé consécutif à une variation d'impédance de la charge, (ou à effectuer la mesure de cette variation),
- à assurer un pilotage de la surface tactile au moyen d'un dispositif ayant pour rôle, outre la commande, de réaliser et d'interpréter la mesure de courant pour en déduire la zone de détection sollicitée.

A cet effet, les n zones 6 de la "métallisation" 5 sont reliées, d'une part, à un potentiel commun V₁ à travers n résistances R et, d'autre part, à un circuit multiplexeur, par exemple analogique, 11 piloté par le calculateur 12, et dont le rôle est de distribuer des paquets d'impulsions ou d'ondes haute fréquence produits par un générateur 13 à une cadence et une périodicité appropriées.

Un circuit de mesure 14 du courant absorbé lors de l'émission de chacun des paquets d'impulsions transmet alors au calculateur 12 un signal lui permettant de déterminer une zone 6 sollicitée et qui a, de ce fait, engendré une variation significative du courant détecté.

On comprendra aisément que, bien que liés par construction, les deux systèmes (affichage/détection tactile) doivent être alimentés de façon telle que l'un des systèmes ne vienne pas perturber l'autre.

A cet effet, comme ceci se trouve illustré sur la figure 4, l'application du potentiel V₂ (visible sur la courbe V_{comi} qui correspond à la tension appliquée à une électrode 6 située au-dessus d'une zone de pixels sélectables par les lignes 1 et 2 de la matrice) est synchronisée sur le signal de commande V_{G} des transistors 9, de telle façon qu'aucun transistor 9 situé sous une zone 6 ne soit activé, et soit à l'état haute impédance lors de l'application de la tension V₂ à cette zone. De cette façon, il n'y a pas de modification du champ électrique dans les condensateurs constitués par les électrodes 4 et les zones 6, les transistors 9 situés sous une zone 6 étant à l'état ouvert lors de l'émission de la tension V₂ sur cette zone 6.

Dans cet exemple, la tension de commande V_{G} d'une ligne de n pixels se présente sous la forme d'un signal périodique à créneaux rectangulaires de période t₁, tandis que la tension V_{S} appliquée à la source des transistors 9 présente une forme crénelée à trois niveaux de tensions V₁, 2V₁ et 0.

Ces deux signaux sont alors agencés de manière à ce que l'activation d'un pixel puisse être obtenue grâce à la mise en phase de V_{G} sur les niveaux 0 et 2V₁ de V_{S}, de manière à obtenir sur l'électrode 4 correspondante un signal crénelé V_{E} d'amplitude 2V₁ et de période déterminée par le nombre de lignes à sélecter (ce signal V_{E} correspondant ici à la tension présente sur l'électrode 4 sélectée par activation de la ligne No 1 par le signal V_{G}).

Dans ce cas, la différence de potentiel V₁ - V_{E} (signal de tension V_{LCD}) entre cette électrode 4 et la zone 6 se présentera sous la forme d'un signal alternatif d'amplitude + ou - V₁ et de période 2t₁ qui assure l'excitation du pixel.

Par contre, lorsque les signaux V_{G} et V_{S} sont en phase sur les niveaux V₁ de V_{S}, la différence de potentiel V₁ - V_{E} entre cette électrode 4 et la zone 6 correspondante se maintiendra à une valeur nulle de sorte que le pixel sera inactivé.

Il est clair que l'afficheur à cristaux liquides et à surface tactile incorporé tel que celui précédemment décrit peut être utilisé dans de nombreuses applications.

Ainsi, il pourra notamment servir à la réalisation d'un terminal de communication à composition variable pouvant, par exemple, comprendre au moins une aire d'affichage capable d'afficher des informations sous la forme de symboles, d'image ou de texte, et au moins une région permettant à l'opérateur de transmettre des informations, cette région incluant alors des plages tactiles pouvant comprendre une ou plusieurs zones de détection 6, délimitées et, éventuellement, identifiées par des motifs obtenus par une excitation appropriée des pixels de la cellule à cristaux liquides.

L'aire d'affichage et les plages tactiles de ladite région pourront en outre être délimités par une grille amovible pouvant être choisie parmi une pluralité de grilles de conformation différente. Dans ce cas, ce terminal pourra comprendre des moyens d'identification de la grille et des moyens permettant de configurer automatiquement la ou les aires d'affichage et/ou les plages tactiles en fonction de la grille utilisée.

## Revendications

1. Afficheur à surface tactile incorporée faisant intervenir une cellule d'affichage du type comprenant, entre deux plaques rigides dont l'une au moins est en matière transparente, une couche (3) réalisée en un ou plusieurs matériaux présentant des propriétés électro-optiques aptes à rendre visible tout ou partie de sa surface, sous l'effet d'une excitation électrique, un réseau d'électrodes disposées sur l'une des faces de ladite couche, et sur chacune desquelles peut être appliquée une tension électrique de manière à provoquer la visualisation d'un élément d'image,et une pluralité de contre-électrodes (6) disposées sur l'autre face de ladite couche et connectées à des circuits électroniques de mesure aptes à détecter des perturbations d'un signal électrique (V₂) appliqué à ces contre-électrodes (6), par suite d'une sollicitation effectuée par un opérateur,
caractérisé en ce que les contre-électrodes (6) sont portées à un potentiel commun par l'intermédiaire de résistances respectives (R), et sont connectées à un circuit multiplexeur (11) piloté par un calculateur (12) de manière à distribuer séquentiellement, sur ces contre-électrodes, des paquets d'impulsions haute fréquence (V₂) produits par un générateur (13), en ce qu'il comprend un circuit de mesure (14) du courant absorbé lors de l'émission de chacun des paquets d'impulsions, ce circuit de mesure (14) étant conçu de manière à transmettre au calculateur (13) un signal en réponse à la détection d'une variation d'impédance significative de la présence d'un élément conducteur à proximité d'une contre-électrode (6), mais sans contact direct avec celui-ci, et en ce que l'application de la tension alternative à haute fréquence (V₂) sur les contre-électrodes (6) est synchronisée mais décalée par rapport à l'application sur les électrodes (4), de la tension électrique servant à provoquer la visualisation des éléments d'image.

2. Afficheur selon la revendication 1,
caractérisé en ce que la susdite cellule d'affichage est de type à cristaux liquides, en ce que la susdite couche est une couche de cristal liquide (3), et en ce que les susdites contre-électrodes (6) sont portées à un potentiel commun (V₁).

3. Afficheur selon l'une des revendications 1 et 2,
caractérisé en ce que la couche de cristal liquide (3) est disposée entre deux plaques (1, 2) en matière transparente, la face interne de l'une de ces plaques (2) portant les susdites électrodes (4), et la face interne de l'autre plaque (1) portant une "métallisation" (5) divisée en une pluralité de zones constituant chacune une contre-électrode (6).

4. Afficheur selon la revendication 3,
caractérisé en ce que les interstices entre les contre-électrodes (6) sont situés en regard des zones comprises entre les éléments d'image déterminés par les électrodes (4) du premier réseau.

5. Afficheur selon l'une des revendications 1 à 4,
caractérisé en ce que la tension électrique, appliquée à une électrode en vue de provoquer la visualisation d'un élément d'image, est transmise par au moins un élément de commande (9) intégré ou non à la cellule, et capable d'isoler ladite électrode.

6. Afficheur selon l'une des revendications précédentes,
caractérisé en ce que le calculateur (12) commande le générateur (13), de façon à ne délivrer les paquets d'impulsions (V₂) sur une contre-électrode (6) que lorsque tous les éléments de commande (9) des électrodes (4) situées sous cette contre-électrode (6) sont, à cet instant, à l'état haute impédance.

7. Afficheur selon la revendication 1,
caractérisé en ce que le calculateur (12) assure la synchronisation du circuit multiplexeur (11), et d'un générateur d'alimentation des éléments d'image (15).

## Patentansprüche

1. Anzeigegerät mit integrierter Tastoberfläche, das eine Anzeigezelle von der Art verwendet, die zwischen zwei steifen Platten, von denen mindestens eine aus einem transparentem Material ist, eine Schicht (3) aus einem oder mehreren Werkstoffen mit elektro-optischen Eigenschaften, welche unter der Wirkung einer elektrischen Erregung ihre ganze oder einen Teil ihrer Oberfläche sichbar machen, ein Netz von Elektroden, die auf einer der Seiten der Schicht angeordnet sind und an jede von denen eine elektrische Spannung angelegt werden kann, um die Sichtbarmachung eines Bildelements zu bewirken, und eine Vielzahl von Gegenelektroden (6) aufweist, die auf der anderen Seite der Schicht angeordnet und an elektronische Meßkreise angeschlossen sind, welche Störungen eines an diese Gegenelektroden (6) angelegten elektrischen Signals (V₂) aufgrund einer Beanspruchung durch eine Bedienungsperson erfassen können, dadurch gekennzeichnet, daß die Gegenelektroden (6) je über Widerstände (R) auf ein gemeinsames Potential gebracht werden und mit einer Multiplexschaltung (11) verbunden sind, die von einem Rechner (12) gesteuert wird, um sequentiell auf diese Gegenelektroden von einem Generator (13) erzeugte Impulspakete hoher Frequenz (V₂) zu verteilen, daß es einen Meßkreis (14) des bei der Aussendung jedes der Impulspakete absorbierten Stroms aufweist, wobei dieser Meßkreis (14) so gestaltet ist, daß er zum Rechner (13) ein Signal als Antwort auf die Erfassung einer Impedanzveränderung überträgt, die das Vorhandensein eines leitenden Elements in der Nähe einer Gegenelektrode (6), aber ohne direkten Kontakt mit diesem bedeutet, und daß das Anlegen der Wechselspannung hoher Frequenz (V₂) an die Gegenelektroden (6) synchronisiert, aber in Bezug auf das Anlegen der zur Sichtbarmachung der Bildelemente dienenden elektrischen Spannung an die Elektroden (4) verschoben ist.

2. Anzeigegerät nach Anspruch 1, dadurch gekennzeichnet, daß die Anzeigezelle von der Art mit Flüssigkristallen ist, daß die Schicht eine Flüssigkristallschicht (3) ist, und daß die Gegenelektroden (6) auf ein gemeinsames Potential (V₁) gebracht sind.

3. Anzeigegerät nach einem der Ansprüche 1 und 2, dadurch gekennzeichnet, daß die Flüssigkristallschicht (3) zwischen zwei Platten (1, 2) aus transparentem Material angeordnet ist, wobei die Innenseite einer dieser Platten (2) die Elektroden (4) trägt und die innere Seite der anderen Platte (1) eine "Metallisierung" (5) trägt, die in eine Vielzahl von Zonen eingeteilt ist, die je eine Gegenelektrode (6) bilden.

4. Anzeigegerät nach Anspruch 3, dadurch gekennzeichnet, daß die Lücken zwischen den Gegenelektroden (6) sich gegenüber den Zonen befinden, die von den durch die Elektroden (4) des ersten Netzes bestimmten Bildelementen eingeschlossen werden.

5. Anzeiger nach einem der Ansprüche 1 bis 4, dadurch gekennzeichnet, daß die elektrische Spannung, die an eine Elektrode zur Sichtbarmachung eines Bildelements angelegt wird, durch mindestens ein Steuerelement (9) übertragen wird, das in die Zelle integriert ist oder nicht und die Elektrode isolieren kann.

6. Anzeigegerät nach einem der vorhergehenden Ansprüche, dadurch gekennzeichnet, daß der Rechner (12) den Generator (13) steuert, um die Impulspakete (V₂) erst dann an eine Gegenelektrode (6) zu liefern, wenn alle Steuerelemente (9) der Elektroden (4), die sich unter dieser Gegenelektrode (6) befinden, in diesem Augenblick im Zustand hoher Impedanz sind.

7. Anzeigegerät nach Anspruch 1, dadurch gekennzeichnet, daß der Rechner (12) die Synchronisierung der Multiplexschaltung (11) und eines Speisegenerators der Bildelemente (15) bewirkt.

## Claims

1. A display device incorporating a touch-sensitive surface using a display cell of the type comprising, between two rigid plates of which at least one is in transparent material, a layer (3) made from one or more materials having electro-optical properties capable of rendering visible all or part of its surface, under the effect of an electrical excitation, a network of electrodes disposed on one of the sides of said layer, and to each of which can be applied an electrical voltage so as to cause a visualization of a pixel, and a plurality of counter-electrodes (6) disposed on the other side of said layer, and connected to electronic measuring circuits capable of detecting perturbations of an electrical signal (V₂) applied to these counter-electrodes (6), subsequent to a solicitation on the part of the operator,
characterized in that the counter-electrodes (6) are brought up to a common potential through respective resistors (R), and are connected to a computer-piloted (12) multiplexing circuit (11) so as to sequentially distribute, to these counter-electrodes, packets of high-frequency pulses (V₂) produced by a generator (13), in that it comprises a circuit (14) for measuring the current absorbed when each of the packets or pulses is emitted, said measuring circuit (14) being designed so as to transmit to the computer (12) a signal in response to the detection of an impedance variation signifying the presence of a conductive element near a counter-electrode (6), though without direct contact with the latter, an in that the applying of a high-frequency alternating voltage (V₂) to the counter-electrodes (6) is synchronized though offset with regard to the applying to the electrodes (4) of the electrical voltage serving to cause the visualizing of the pixels.

2. The display device as claimed in claim 1, characterized in that said display cell is of the liquid crystal type, in that said layer is a layer of liquid crystal (3), and in that said counter-electrodes (6) are brought up to a common potential (V₁).

3. The display device as claimed in either claim 1 or 2,
characterized in that said layer of liquid crystal (3) is disposed between two plates (1, 2) in transparent material, the inner side of one of said plates (2) bearing said electrodes (4), and the inner side of said other plate (1) bearing a "metallization" (5) divided into a plurality of zones each constituting a counter-electrode (6).

4. The display device as claimed in claim 3,
characterized in that the gaps between said counter-electrodes (6) are situated opposite zones included between the pixels determined by the electrodes (4) of the first network.

5. The display device as claimed in any one of claims 1 to 4,
characterized in that said electrical voltage, applied to an electrode with a view to causing visualization of a pixel, is transmitted by at least one control element (9) integrated in said cell or not, and capable of insulating said electrode.

6. The display device as claimed in any one of the previous claims,
characterized in that said computer (12) commands the generator (13), so as to only supply said packets of pulses (V₂) to a counter-electrode (6) when all said control elements (9) of said electrodes (4) situated below said counter-electrode (6) are, at that instant, in the high impedance state.

7. The display device as claimed in claim 1, characterized in that said computer (12) ensures the synchronization of said multiplexing circuit (11), and of a generator of power to the pixels (15).
